(19) Europäisches Patentamt
European Patent Office
Office européen des brevets

(11) **EP 2 689 165 B1**

(12) **EUROPÄISCHE PATENTSCHRIFT**

(45) Veröffentlichungstag und Bekanntmachung des Hinweises auf die Patenterteilung:
**25.03.2015 Patentblatt 2015/13**

(21) Anmeldenummer: **12703068.2**

(22) Anmeldetag: **02.02.2012**

(51) Int Cl.:
*F16H 59/68* (2006.01)    *F16H 61/28* (2006.01)

(86) Internationale Anmeldenummer:
**PCT/EP2012/051761**

(87) Internationale Veröffentlichungsnummer:
**WO 2012/126662 (27.09.2012 Gazette 2012/39)**

(54) **VERFAHREN ZUM STEUERN EINES AUTOMATISCHEN ODER AUTOMATISIERTEN SCHALTSYSTEMS**

METHOD FOR CONTROLLING AN AUTOMATIC OR AUTOMATED SHIFT SYSTEM

PROCEDE DE COMMANDE D'UN SYSTEME DE COMMUTATION AUTOMATIQUE OU AUTOMATISE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2011 DE 102011005852**

(43) Veröffentlichungstag der Anmeldung:
**29.01.2014 Patentblatt 2014/05**

(73) Patentinhaber: **ZF Friedrichshafen AG 88038 Friedrichshafen (DE)**

(72) Erfinder:
• **MORO-OLIVEROS, Melchor 88074 Meckenbeuren (DE)**
• **STEINBORN, Mario 88046 Friedrichshafen (DE)**

(56) Entgegenhaltungen:
**DE-A1- 19 931 973        DE-A1-102004 056 407
DE-A1-102006 040 476    DE-A1-102006 058 912**

## Beschreibung

Die Erfindung betrifft ein Verfahren zum Steuern eines automatischen oder automatisierten Schaltsystems mit einem oder mehreren über zugeordnete Schaltventile druckmittelbetätigten Schaltzylindern, wenigstens einem den Schaltventilen vorgeordneten Hauptabschaltventil und mit einem Steuergerät, über das die Schalt- und Hauptabschaltventile gesteuert werden, wobei der Druckmittelbedarf für durchzuführende Schaltvorgänge ermittelt und die jeweiligen Hauptabschaltventile in Abhängigkeit davon angesteuert werden.

Automatische oder automatisierte Schaltsysteme der eingangs genannten Art werden in großem Umfang in Verbindung mit Stufenschaltgetrieben für Kraftfahrzeuge eingesetzt, wobei mittels der hydraulischen oder pneumatischen Schaltzylinder in an sich bekannter Weise die Schaltgassen bzw. Gangstufen des Schaltgetriebes gewählt und eingelegt werden. Die Druckmittelversorgung erfolgt im allgemeinen von einem fahrzeugseitigen Öldruck- oder Luftdruckversorgungssystem, welches über das Hauptabschaltventil bzw. die Hauptabschaltventile wahlweise mit dem Schaltsystem verbunden bzw. von diesem getrennt werden kann. Insbesondere bei einem pneumatischen Schaltsystem umfasst das fahrzeugseitige Luftdruckversorgungssystem üblicherweise einen als Druckpuffer dienenden Luftvorratsbehälter. Dem getriebeseitigen Schaltsystem kann ein den Hauptschaltventilen nachgeordneter, auch als Getriebestellerraum bezeichneter Luftvorratsraum zugeordnet sein, von dem aus die Schaltventile und die diesen nachgeordneten Schaltzylinder mit Druckluft versorgt werden.

Eine grundsätzliche Schwierigkeit bei Schaltsystemen der oben genannten Art besteht darin, eine Regeleinrichtung zu entwickeln, die den für jeden Schaltvorgang geeigneten Luftdruck in den Schaltzylindern schnell und konstant einregelt. Im allgemeinen findet bei einem Sollgangwechsel und dem darauf folgenden Beginn der Schaltzylinderverstellung ein Druckeinbruch im Schaltsystem statt, weil durch die Bewegung des Schaltkolbens in Richtung Zielposition ein relativ großes Volumen im Schaltzylinder frei wird. Übliche Regler sind nicht mehr in der Lage, in der zur Verfügung stehenden kurzen Schaltzeit dieses Volumen so zu befüllen, dass der Schaltdruck auf seinem Sollpegel bleibt. Wenn aber zur Abhilfe Ventile mit großem Durchsatz und kurzer Ansprechzeit eingesetzt werden, besteht die Gefahr, dass der Sollwert überschritten wird, so dass die Schaltung mit einem höheren Druck als erwünscht beginnen würde. Das gilt insbesondere dann, wenn als Hauptabschaltventile übliche 2/2-Wegeventile eingesetzt werden, die keine Druckabfuhr nach außen ermöglichen. Außerdem sind Ventile der beschriebenen Art vergleichsweise teuer und erlauben keine feineren Regelvorgänge.

Gebräuchlich sind derzeit Druckminderventile, die bei veränderlichem Eingangsdruck (Fahrzeugdruck) den Ausgangsdruck (Druck an den Schaltzylindern) konstant auf einem vorgegebenen Wert halten, oder Druckbegrenzungsventile, die den Druck an den Schaltzylindern auf einen voreingestellten Druck begrenzen. Beide Ventilarten unterliegen der Einschränkung, dass ein auf diese Weise ausgelegtes Schaltsystem die Schaltzylinder nur bei dem in den mechanischen Ventilen voreingestellten Luftdruck betätigen kann. Es ist deshalb nicht möglich, z.B. bei einem niedrigen Druck zu schalten, wenn mechanische Elemente geschont werden sollen, oder bei einem höheren Druck zu schalten, wenn beispielsweise ein Gang schneller eingelegt werden soll. Üblicherweise ist ein Druckregler der genannten Art in einem automatischen oder automatisierten Schaltsystem aufgrund der kurzen Schaltdauer und der hohen Druckeinbrüche im Schaltsystem jeweils am Anfang eines Schaltvorganges nicht in der Lage, den Druck schnell genug wieder auf seinen Sollwert zu bringen. Der Luftraum im Schaltzylinder ist üblicherweise so klein, dass beim erstmaligen Betätigen des Schaltkolbens, d.h. bei der Befüllung der Schaltzylinder, der Druck erheblich unter den Sollwert einbricht. Die genannten Druckregler sind deshalb in der Regel nicht in der Lage, den Druck während des gesamten Schaltablaufs konstant auf einem gewünschten Sollwert zu halten.

Es sind deshalb auch schon über eine Schaltsoftware angesteuerte Druckmagnetventile eingesetzt worden, die es grundsätzlich ermöglichen, an den Schaltzylindern beliebige unterschiedliche Druckschwellen aufzubauen, beispielsweise mit dem Ziel, je nach Fahrsituation bzw. je nach dem mechanischen Zustand der Schaltelemente die Gangstufen immer mit einem geeigneten Luftdruck zu schalten. Diese sind jedoch technisch verhältnismäßig aufwendig und teuer.

Aus der DE 10 2006 040 476 A1 ist bereits eine hydraulische oder pneumatische Steuerungseinrichtung der eingangs genannten Art für ein automatisiertes Schaltgetriebe bekannt, bei welchem der veränderliche Druckmittelbedarf vor einem Schaltvorgang abgeschätzt oder ein Druckabfall im System mittels eines Drucksenors ermittelt wird, und wobei in Abhängigkeit von dem Druckmittelbedarf ein, zwei oder mehr Hauptabschaltventile geöffnet werden, um den Druckmittelbedarf zu decken. Dieses Verfahren ist jedoch, sofern der Druckmittelbedarf geschätzt wird, ungenau, und sofern die Ermittlung über einen Druckabfall im System erfolgt, mit den weiter vorne beschriebenen Nachteilen behaftet, so dass ein konstanter Druck in den Schaltzylindern auf diese Weise nicht erreicht wird.

Vor diesem Hintergrund liegt der Erfindung die Aufgabe zugrunde, ein Verfahren zum Steuern eines automatischen oder automatisierten Schaltsystems gemäß dem Oberbegriff des Anspruchs 1 zu schaffen, welches es erlaubt, mit einfachen Miteln bei einem Schaltvorgang Druckeinbrüche im Schaltsystem weitgehend oder vollständig zu verhindern.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass der Druckmittelbedarf für jeden denkbaren Schaltvorgang auch unter Berücksichtigung unterschiedlicher Schaltdruckpegel aus den beim Schaltvorgang freiwerdenden und zu befüllenden Zylindervolumen exakt bestimmbar ist, so dass schon bei Einleitung eines Schaltbefehls und vor jeglichem Druckeinbruch im Schaltsystem der Druckmittelbedarf exakt bekannt ist und durch geeignete Steuerungsmaßnahmen kompensiert werden kann.

Demnach geht die Erfindung aus von einem Verfahren zum Steuern eines automatischen oder automatisierten Schaltsystems, mit einem oder mehreren über zugeordnete Schaltventile druckmittelbetätigten Schaltzylindern, wenigstens einem den Schaltventilen vorgeordneten Hauptabschaltventil und mit einem Steuergerät zum Steuern der Schalt- und Hauptabschaltventile, wobei der Druckmittelbedarf für durchzuführende Schaltvorgänge ermittelt und die jeweiligen Hauptabschaltventile in Abängigkeit davon angesteuert werden.

Zur Lösung der gestellten Aufgabe ist dabei vorgesehen, dass der Druckmitelbedarf der möglichen unterschiedlichen Schaltszenarien des Schaltsystems vorab bestimmt wird, dass die Druckmittelbedarfswerte bzw. diesen entsprechende Schaltzeiten für die Hauptabschaltventile in einem Datenfeld des Steuergerätes abgelegt werden, und dass bei Einleitung eines Schaltbefehls sowie vor einem Druckeinbruch in der den Hauptabschaltventilen nachgeordneten Schaltungsanordnung jeweils aus dem zugeordneten, abgelegten Druckmittelbedarfswert im Steuergerät berechnete bzw. direkt abgelegte Schaltzeiten für die Hauptabschaltventile abgerufen und diese entsprechend dem bekannten Druckmittelbedarf angesteuert werden

Dieses Verfahren unterscheidet sich demnach von bekannten Verfahren dadurch, dass es für jeden denkbaren Schaltvorgang den entsprechenden Druckmittelbedarf und auch die zu dessen Deckung erforderlichen Schaltzyklen des Hauptabschaltventils bzw. der Hauptabschaltventile schon kennt, so dass die Steuerung bei Einleitung eines Schaltbefehls unverzüglich mit einer entsprechenden Ansteuerung der Hauptabschaltventile darauf reagieren kann. Auf diese Weise kann der das Druckmittel führende Raum vor den Schaltventilen, insbesondere ein gegebenenfalls vorgesehener Luftvorratsraum schon befüllt werden, bevor die eigentliche Schaltung beginnt und die Kolben in den Schaltzylindern sich in Bewegung setzen.

Um auch auf größere Unterschiede beim Druckmittelbedarf schnell reagieren zu können, ist gemäß einer weiteren Ausgestaltung der Erfindung vorgesehen, dass ein dem höchsten vorab bestimmten Druckmittelbedarf entsprechender Volumenstrom auf mehrere parallel angeordnete Hauptabschaltventile aufgeteilt wird, und dass dann bei einem geringeren Druckmittelbedarf jeweils eine dem entsprechend geringeren Volumenstrom entsprechende geringere Anzahl von Hauptabschaltventilen angesteuert wird. Dies ermöglicht eine grobe Anpassung an unterschiedliche Volumenströme. Im übrigen erfolgt die Steuerung des erforderlichen Volumens über die Öffnungszeit der Hauptabschaltventile.

Gemäß einer bevorzugten Ausgestaltung der Erfindung wird das genannte Verfahren als Vorsteueranteil eines gesamten Schaltvorganges genutzt, welchem ein über einen Druckregler oder dergleichen geregelter Regelanteil folgt. Dazu kann beispielsweise der Druck im Schaltsystem über einen mit dem Steuergerät verbundenen Drucksensor erfasst und der Vorsteueranteil beendet werden, wenn der Druck im Schaltsystem sich einem vorgegebenen Solldruck annähert. Die weitere Druckegelung erfolgt dann mittels herkömmlicher Druckregler oder dergleichen.

Alternativ dazu kann vorgesehen sein, dass der Vorsteueranteil einerseits und der Regelanteil andererseits über eine von der Differenz zwischen Sollwert und Istwert (Sollwert minus Istwert) abhängige Gewichtung wie folgt bestimmt wird:

$$\text{Gewichtung für den Vorsteueranteil} = (\text{Sollwert} - \text{Istwert}) / \text{Sollwert}$$

$$\text{Gewichtung für den Regelanteil} = (1 - \text{Gewichtung für den Vorsteueranteil})$$

Wie bereits weiter vorne erwähnt wurde, wird gemäß der Erfindung vorzugsweise über die Hauptabschaltventile ein Vorratsraum befüllt, aus welchem die nachgeordneten Schaltventile und Schaltzylinder mit Druckmittel versorgt werden. Dieser Vorratsraum lässt sich während des Vorsteueranteils so weit befüllen, dass genug Druckmittel vorhanden ist, um im anschließenden Regelanteil Druckeinbrüche weitgehend oder vollständig zu vermeiden.

Um einen eventuell auftretenden Überdruck im Schaltsystem zu vermeiden, erfolgt ein erforderlicher Druckabbau über die bei einer vorgegebenen Schaltstellung mit einer Entlüftungsleitung verbundenen Schaltventile, wie anhand eines Ausführungsbeispiels erläutert wird. Das ermöglicht es, als Hauptabschaltventile 2/2-Wegeventile einzusetzen, die kostengünstig und deshalb zu bevorzugen sind.

Zur weiteren Erläuterung der Erfindung ist der Beschreibung eine Zeichnung beigefügt. Diese zeigt schematisch ein Schaltschema zur Durchführung des erfindungsgemäßen Steuerungsverfahrens.

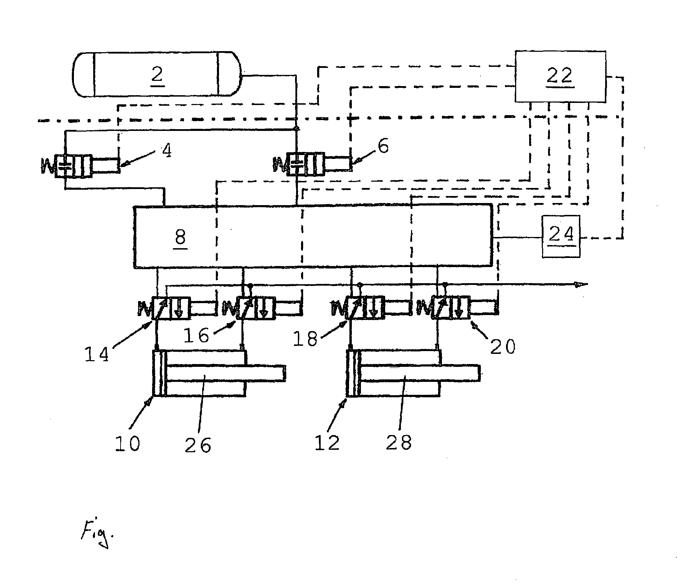

Das in der Figur dargestellte Schaltsystem, beispielsweise ein pneumatisches Schaltsystem zum Schalten eines automatischen oder automatisierten Schaltgetriebes, wird von einem fahrzeugseitigen Druckmittelversorgungssystem, welches einen Druckmittelvorratsbehälter 2 umfasst, mit Druckmittel versorgt.

Das Schaltsystem verfügt im vorliegenden Fall über zwei dem Druckmittelvorratsbehälter 2 nachgeordnete Hauptabschaltventile 4 und 6, welche die diesen nachgeordnete Schaltungsanordnung mit dem Druckmittelvorratsbehälter 2 verbinden oder von diesem trennen können.

Die nachgeordnete Schaltungsanordnung umfasst im dargestellten Fall einen Druckmittelvorratsraum 8, welcher bei einer Getriebesteuerung auch als Getriebestellerraum bezeichnet wird. Diesem nachgeordnet sind zwei doppelt wirkende Schaltzylinder 10 bzw. 12, die jeweils von zwei zugeordneten Schaltventilen 14, 16 bzw. 18, 20 angesteuert werden, wie an sich bekannt ist.

Die Hauptabschaltventile 4 und 6 sind jeweils als 2/2-Wegeventile ausgebildet, welche in einer Stellung den Druckmittelvorratsbehälter 2 mit dem Druckmittelvorratsraum 8 verbinden und in der zweiten Stellung diese voneinander trennen.

Die Schaltventile 14, 16, 18, 20 sind jeweils als 3/2-Wegeventile ausgebildet, welche in einer Stellung den jeweils zugeordneten Druckraum der Schaltzylinder 10, 12 mit dem Druckmittelvorratsraum 8 verbinden und in der anderen Stellung den Druckraum nach außen entlüften. Auf diese Weise kann jeder Schaltzylinder 10, 12 in zwei endseitige und eine mittlere Schaltstellung verstellt werden.

Die Hauptabschaltventile 4, 6 und die Schaltventile 14, 16, 18, 20 sind jeweils mit einem Steuergerät 22 über Steuerleitungen verbunden, das diese Ventile nach Einleitung eines Schaltbefehls entsprechend dem abgelegten Programm steuert. Der Druck in der nachgeordneten Schaltungsanordnung wird optional von einem mit dem Steuergerät 22 über eine Sensorleitung verbundenen Drucksensor 24 erfasst und in das Steuergerät 22 eingegeben.

Der Algorithmus des erfindungsgemäßen Verfahrens beruht auf dem folgenden Prinzip:

Wenn ein Schaltbefehl erfolgt, beginnt eine bedarfsabhängige Vorsteuerung der Hauptabschaltventile 4, 6. Der maximal mögliche Druckmittelstrom ist aus den mechanischen Kennzahlen und aus der Anzahl der vorhandenen Hauptabschaltventile bekannt. Das zu befüllende Volumen ist aus der Ist- und Sollposition der jeweils zu schaltenden Schaltzylinder 10, 12 und aus deren Abmessungen bekannt. Es kann dann z.B. für jeden einzulegenden Gang eines Schaltgetriebes bestimmt werden, welche Hauptabschaltventile für welche Zeitdauer zu öffnen bzw. anzusteuern sind, um das freiwerdende Volumen zu befüllen, ohne dass ein Druckeinbruch eintritt oder der Solldruck überschritten wird.

Der jeweilige Schaltbefehl wird beispielsweise identifiziert, indem die Betätigung der Schaltventile beobachtet wird. Werden beispielsweise in der Figur die Schaltventile 14 und 18 angesteuert, so deutet das darauf hin, dass die Kolben 26, 28 in den Schaltzylindern 10 und 12 in die rechte Endposition verstellt werden sollen. Werden hingegen die Schaltventile 14 und 16 angesteuert, so deutet das darauf hin, dass der Kolben 26 in dem Schaltzylinder 10 in die Mittelposition verstellt werden soll, während der Kolben 28 des Schaltzylinders 12 in seiner linken Endposition verbleibt. Die Positionen der in der Schaltzylinder 10, 12 sind im Beispiel einer Getriebeschaltung durch den eingelegten Istgang oder durch nicht dargestellte Wegsensoren bekannt.

Zusätzlich zur Schaltventilaktivität können der Istgang und der Sollgang auch zur Identifizierung des Schaltbefehls herangezogen werden, z.B. bedeutet Sollgang = Istgang: keine Schaltung, während Sollgang ≠ Istgang bedeutet: Schaltung findet statt.

Wenn ein Schaltbefehl eingeleitet wird, dann werden demnach die Hauptabschaltventile 4, 6 in der weiter vorne beschriebenen Weise so angesteuert, dass in der nachgeordneten Schaltungsanordnung ein ausreichender Druck anliegt, um die Schaltzylinder 10, 12 mit einem konstanten Druck zu beaufschlagen.

Wie weiter vorne bereits ausgeführt wurde, kann das Verfahren gemäß der Erfindung als Vorsteueranteil eines gesamten Steuerungsvorgangs verwendet werden, welcher bei Erreichen eines vorgegebenen, über den Drucksensor 24 erfassten Vorsteuerdruck durch einen herkömmlichen Regelanteil mittels herkömmlicher Druckregler abgeschlossen wird.

Das beschriebene Verfahren ersetzt bzw. ergänzt demnach mechanische Druckminder- oder Druckbegrenzungsventile bzw. klassische und nichtlineare bzw. nichtstetige Regler, die zwar beliebige Druckpegel einregeln, hochdynamische Druckeinbrüche jedoch nicht ausgleichen können.

Bezugszeichen

| | |
|---|---|
| 2 | Druckmittelvorratsbehälter |
| 4 | Hauptabschaltventil |
| 6 | Hauptabschaltventil |
| 8 | Druckmittelvorratsraum |
| 10 | Schaltzylinder |

| 12 | Schaltzylinder |
|----|------|
| 14 | Schaltventil |
| 16 | Schaltventil |
| 18 | Schaltventil |
| 20 | Schaltventil |
| 22 | Steuergerät |
| 24 | Drucksensor |
| 26 | Kolben |
| 28 | Kolben |

**Patentansprüche**

1.  Verfahren zum Steuern eines automatischen oder automatisierten Schaltsystems, mit einem oder mehreren über zugeordnete Schaltventile (14, 16, 18, 20) druckmittelbetätigten Schaltzylindern (10, 12), wenigstens einem den Schaltventilen vorgeordneten Hauptabschaltventil (4, 6) und mit einem Steuergerät (22) zur Steuerung der Schaltventile und des wenigstens einen Hauptabschaltventils, wobei der Druckmittelbedarf für durchzuführende Schaltvorgänge ermittelt und das wenigstens eine Hauptabschaltventil (4, 6) in Abhängigkeit davon angesteuert wird, **dadurch gekennzeichnet, dass** der Druckmittelbedarf der möglichen unterschiedlichen Schaltszenarien des Schaltsystems vorab bestimmt wird, dass die Druckmittelbedarfswerte bzw. diesen entsprechende Schaltzeiten für das wenigstens eine Hauptabschaltventil (4, 6) in einem Datenfeld des Steuergerätes (22) abgelegt werden, und dass bei Einleitung eines Schaltbefehls sowie vor einem Druckeinbruch in einer dem wenigstens einen Hauptabschaltventil (4, 6) nachgeordneten Schaltungsanordnung jeweils aus dem zugeordneten, abgelegten Druckmittelbedarfswert im Steuergerät (22) berechnete bzw. direkt abgelegte Schaltzeiten für das wenigstens eine Hauptabschaltventil (4, 6) abgerufen werden und dieses entsprechend dem bekannten Druckmittelbedarf angesteuert wird.

2.  Verfahren nach Anspruch 1, **dadurch gekennzeichnet, dass** ein dem höchsten vorab bestimmten Druckmittelbedarf entsprechender Volumenstrom auf mehrere parallel angeordnete Hauptabschaltventile (4, 6) aufgeteilt wird, und dass bei einem geringeren Druckmittelbedarf jeweils eine dem entsprechenden Volumenstrom entsprechende geringere Anzahl von Hauptabschaltventilen angesteuert wird.

3.  Verfahren nach Anspruch 2, **dadurch gekennzeichnet, dass** der einem vorgegebenen Druckmittelbedarf entsprechende Volumenstrom über die Öffnungszeit der Hauptabschaltventile (4, 6) gesteuert wird.

4.  Verfahren nach einem der Ansprüche 1 bis 3, **dadurch gekennzeichnet, dass** dieses Verfahren als Vorsteueranteil eines gesamten Schaltvorganges eingesetzt wird, welchem ein über einen Druckregler oder dergleichen geregelter Regelanteil folgt.

5.  Verfahren nach Anspruch 4, **dadurch gekennzeichnet, dass** der Druck im Schaltsystem über einen mit dem Steuergerät (22) verbundenen Drucksensor (24) erfasst wird, und dass der Vorsteueranteil beendet wird, wenn der Druck im Schaltsystem einen Solldruck erreicht.

6.  Verfahren nach Anspruch 4, **dadurch gekennzeichnet, dass** der Vorsteueranteil einerseits und der Regelanteil andererseits über eine von der Differenz zwischen Sollwert und Istwert (Sollwert - Istwert) abhängige Gewichtung bestimmt werden wie folgt:

$$\text{Gewichtung für den Vorsteueranteil} = (\text{Sollwert} - \text{Istwert}) / \text{Sollwert}$$

$$\text{Gewichtung für den Regelanteil} = (1 - \text{Gewichtung für den Vorsteueranteil})$$

7.  Verfahren nach einem der Ansprüche 1 bis 5, **dadurch gekennzeichnet, dass** über das wenigstens eine Hauptabschaltventil (4, 6) ein Druckmittelvorratsraum (8) befüllt wird, aus welchem die nachgeordneten Schaltventile (14, 16, 18, 20) und die Schaltzylinder (10, 12) mit Druckmittel versorgt werden.

8. Verfahren nach einem der Ansprüche 1 bis 7, **dadurch gekennzeichnet, dass** ein erforderlicher Druckabbau im Schaltsystem über die bei einer vorgegebenen Schaltstellung mit einer Entlüftungsleitung verbundenen Schaltventile (14, 16, 18, 20) erfolgt.

**Claims**

1. Method for controlling an automatic or automated shift system, with one or more shift cylinders (10, 12) actuated by pressure medium via assigned shift valves (14, 16, 18, 20), with at least one main cut-off valve (4, 6) preceding the shift valves and with a control unit (22) for controlling the shift valves and the at least one main cut-off valve, the pressure medium demand for shift operations to be carried out being determined and the at least one main cut-off valve (4, 6) being activated as a function of this, **characterized in that** the pressure medium demand of the possible different shift scenarios of the shift system is determined beforehand, **in that** the pressure medium demand values or shift times corresponding to these are stored for the at least one main cut-off valve (4, 6) in a data field of the control unit (22), and **in that**, upon the initiation of a shift command and before a pressure breakdown in a shift arrangement following the at least one main cut-off valve (4, 6), shift times for the at least one main cut-off valve (4, 6), which are in each case calculated from the assigned stored pressure medium demand value in the control unit (22) or are stored directly therein, are retrieved, and the said main cut-off valve is activated according to the known pressure medium demand.

2. Method according to Claim 1, **characterized in that** a volume flow corresponding to the maximum predetermined pressure medium demand is apportioned to a plurality of main cut-off valves (4, 6) arranged in parallel, and **in that**, in the case of a lower pressure medium demand, in each case a smaller number of main cut-off valves which corresponds to the corresponding volume flow are activated.

3. Method according to Claim 2, **characterized in that** the volume flow corresponding to a predetermined pressure medium demand is controlled via the opening time of the main cut-off valves (4, 6).

4. Method according to one of Claims 1 to 3, **characterized in that** this method is used as a pilot control portion of an overall shift operation, which pilot control portion is followed by a regulating portion regulated via a pressure regulator or the like.

5. Method according to Claim 4, **characterized in that** the pressure in the shift system is detected via a pressure sensor (24) connected to the control unit (22), and **in that** the pilot control portion is terminated when the pressure in the shift system reaches a desired pressure.

6. Method according to Claim 4, **characterized in that** the pilot control portion, on the one hand, and the regulating portion, on the other hand, are determined via a weighting dependent upon the difference between the desired value and actual value (desired value - actual value), as follows:

```
weighting for the pilot control portion = (desired
value - actual value)/desired value


weighting   for   the   regulating   portion   =   (1   -
weighting for the pilot control portion).
```

7. Method according to one of Claims 1 to 5, **characterized in that**, via the at least one main cut-off valve (4, 6), a pressure medium storage space (8) is filled, out of which the following shift valves (14, 16, 18, 20) and the shift cylinders (10, 12) are supplied with pressure medium.

8. Method according to one of Claims 1 to 7, **characterized in that** a required pressure reduction in the shift system takes place via the shift valves (14, 16, 18, 20) which, in a predetermined shift position, are connected to a vent line.

**Revendications**

1. Procédé de commande d'un système de commutation automatique ou automatisé, comprenant un ou plusieurs cylindres de commutation (10, 12) actionnés par un fluide sous pression par le biais de soupapes de commutation associées (14, 16, 18, 20), au moins une soupape de coupure principale (4, 6) disposée avant les soupapes de commutation et un appareil de commande (22) pour la commande des soupapes de commutation et de l'au moins une soupape de coupure principale, le besoin en fluide sous pression pour des opérations de commutation à effectuer étant déterminé et l'au moins une soupape de coupure principale (4, 6) étant commandée en fonction dudit besoin, **caractérisé en ce que** le besoin en fluide sous pression des différents scénarios de commutation possibles du système de commutation est déterminé au préalable, **en ce que** les valeurs de besoins en fluide sous pression ou des temps de commutation correspondant à celles-ci pour l'au moins une soupape de coupure principale (4, 6) sont enregistrés dans un champ de données de l'appareil de commande (22), et **en ce qu'**à l'amorce d'un ordre de commutation ainsi qu'avant une chute de pression dans un agencement de commutation disposé après l'au moins une soupape de coupure principale (4, 6), à chaque fois des temps de commutation, calculés à partir de la valeur de besoins en fluide sous pression enregistrée associée dans l'appareil de commande (22), ou enregistrés directement, pour l'au moins une soupape de coupure principale (4, 6), sont rappelés et ladite soupape de coupure principale est commandée en fonction du besoin en fluide sous pression connu.

2. Procédé selon la revendication 1, **caractérisé en ce qu'**un débit volumique correspondant au besoin en fluide sous pression le plus élevé déterminé au préalable est réparti sur plusieurs soupapes de coupure principales disposées en parallèle (4, 6) et **en ce que** dans le cas d'un besoin en fluide sous pression inférieur, à chaque fois un certain nombre de soupapes de coupure principales inférieur, correspondant au débit volumique correspondant, est commandé.

3. Procédé selon la revendication 2, **caractérisé en ce que** le débit volumique correspondant à un besoin en fluide sous pression prédéfini est commandé par le biais du temps d'ouverture des soupapes de coupure principales (4, 6).

4. Procédé selon l'une quelconque des revendications 1 à 3, **caractérisé en ce que** ce procédé est utilisé en tant que partie pilote d'une opération de commutation totale, qui est suivie d'une partie de régulation régulée par le biais d'un régulateur de pression ou similaire.

5. Procédé selon la revendication 4, **caractérisé en ce que** la pression dans le système de commutation est détectée par le biais d'un capteur de pression (24) connecté à l'appareil de commande (22) et **en ce que** la partie pilote est terminée lorsque la pression dans le système de commutation atteint une pression de consigne.

6. Procédé selon la revendication 4, **caractérisé en ce que** la partie pilote d'une part et la partie de régulation d'autre part sont déterminées par le biais d'une pondération dépendant de la différence entre la valeur de consigne et la valeur réelle (valeur de consigne - valeur réelle), comme suit :

```
pondération pour la partie pilote = (valeur de
consigne - valeur réelle)/valeur de consigne
```

```
pondération pour la partie de régulation = (1 -
pondération pour la partie pilote).
```

7. Procédé selon l'une quelconque des revendications 1 à 5, **caractérisé en ce qu'**un espace de stockage de fluide sous pression (8) est rempli par le biais de l'au moins une soupape de coupure principale (4, 6), à partir duquel les soupapes de commutation disposées en aval (14, 16, 18, 20) et les cylindres de commutation (10, 12) sont alimentés en fluide sous pression.

8. Procédé selon l'une quelconque des revendications 1 à 7, **caractérisé en ce qu'**une diminution de pression nécessaire dans le système de commutation s'effectue par le biais des soupapes de commutation (14, 16, 18, 20) connectées à une conduite de désaérage pour une position de commutation prédéfinie.

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006040476 A1